# EUROPÄISCHE PATENTANMELDUNG

(11) **EP 2 551 539 A1**
(43) Veröffentlichungstag der Anmeldung: **30.01.2013**
(21) Anmeldenummer: 12162947.1
(22) Anmeldetag: 03.04.2012
(51) Int. Cl.: F16C 33/46, F16C 35/063, F16C 35/067, F16H 57/00

(54) **Zahnradeinrichtung für einen Getriebestrang**

(30) Priorität: 28.07.2011 DE 102011079996
(71) Anmelder: Schaeffler Technologies AG & Co. KG, 91074 Herzogenaurach (DE)
(72) Erfinder: Rocca, Umberto, 91074 HERZOGENAURACH (DE); Malik, Reinhart, 91074 Herzogenaurach (DE)

(57) **Zusammenfassung**

Die Erfindung bezieht sich auf eine Zahnradeinrichtung mit einem Grundkörper 1, einem an dem Grundkörper 1 ausgebildeten Zahnkranz 2, einem Nabenabschnitt 3, einem Achszapfen 5 und einer Lagereinrichtung 4 die auf den Achszapfen 5 aufgesetzt ist. Erfindungsgemäß die Lagereinrichtung 4 auf dem Achszapfen 5 axial gesichert, so dass der Grundkörper 1, die Lagereinrichtung 4 und der Achszapfen 5 eine für sich vormontierte Baueinheit bilden.

## Beschreibung

Die Erfindung bezieht sich auf eine Zahnradeinrichtung mit einem Zahnradgrundkörper und einem durch diesen gebildeten Zahnkranz, der als solcher in verbautem Zustand mit einem An- und/oder Abtriebsorgan eines die Zahnradeinrichtung beinhaltenden Getriebestranges in Eingriff steht. Der Zahnkranz kann eine zum Eingriff mit einer Kette, oder für einen Eingriff mit einem weiteren Zahnrad vorgesehene Eingriffsgeometrie aufweisen.

Aus DE 10 2007 049 050 A1 ist eine Zahnradeinrichtung bekannt, die einen Zahnradgrundkörper mit einem ersten und einem zweiten, jeweils axial überstehenden Achszapfen aufweist. Die beiden Achszapfen bilden jeweils eine Lagerfläche auf welcher ein Nadellager sitzt. Die so mit Nadellagern bestückten Achszapfen sitzen in Lagerbohrungen welche in einem Getriebegehäuse ausgebildet sind. Die Lagerbohrungen, die Nadellager und die Lagerflächen müssen derart aufeinander abgestimmt sein, dass sich im Bereich der hierdurch gebildeten Lagerstelle ein hinreichendes Lagerspiel ergibt. Zudem müssen in die in dem Getriebegehäuse gebildeten Bohrungen qualitativ hinreichend hochwertige Laufflächen bilden.

### Aufgabe der Erfindung

Der Erfindung liegt die Aufgabe zugrunde, eine Zahnradeinrichtung für einen Getriebestrang zu schaffen, die unter fertigungstechnischen Gesichtspunkten relativ kostengünstig herstellbar und bei verminderten Anforderungen an die Aufnahmeperipherie montagetechnisch vorteilhaft in einen entsprechenden Getriebestrang einbindbar ist.

Diese Aufgabe wird erfindungsgemäß gelöst durch eine Zahnradeinrichtung mit:
- einem Grundkörper,
- einem an dem Grundkörper ausgebildeten Zahnkranz,
- einem Nabenabschnitt,
- einem Achszapfen, und
- einer Lagereinrichtung die auf den Achszapfen aufgesetzt ist,
- wobei der Achszapfen und die Lagereinrichtung an dem Grundkörper derart axial gesichert sind, dass der Grundkörper, die Lagereinrichtung und der Achszapfen eine für sich vormontierte Baueinheit bilden.

Dadurch wird es auf vorteilhafte Weise möglich, eine Zahnradeinrichtung zu schaffen, die als ins sich vormontierte Baugruppe mit verliersicher integrierter Lagerung gehandhabt und zur Schaffung eines Getriebestrangs in eine entsprechende Umgebungsstruktur eingefügt werden kann.

Der Achszapfen kann einen relativ großen Außendurchmesser aufweisen und hierbei als Hohlzapfen ausgeführt sein. Bei dieser Variante steht für die Abstützung der Lagereinrichtung eine große äußere Lauffläche zur Verfügung. Alternativ zur der Ausführung des Achszapfens als Hohlzapfen ist es auch möglich, diesen als Vollmaterialzapfen, zu fertigen.

Der Grundkörper ist gemäß einer besonders bevorzugten Ausführungsform der Erfindung als Blechumformteil gefertigt. Die Umformung des Blechmaterials kann Zieh-, Biege- und Fließpressumformungsschritte beinhalten. Insbesondere im Bereich des Zahnkranzes kann der Grundkörper so gestaltet sein, dass das Material in die Zahnzonen von innen her radial einbaucht und dabei auf der Rück- oder Innenseite ein Wellen- oder Zahnprofil bildet.

Gemäß einem besonderen Aspekt der Erfindung ist die Lagereinrichtung als Wälzlager ausgeführt. Dieses Wälzlager umfasst dabei vorzugsweise ein Laufbuchsengehäuse in welchem die Wälzkörper aufgenommen und geführt sind und auf der Innenumfangsfläche des Laufbuchsengehäuses abwälzen. Weiterhin ist vorzugsweise in die Baugruppe auch eine als Gleitringlager ausgeführte Axiallagereinrichtung eingebunden durch welche der Grundkörper in verbautem Zustand axial abgestützt wird. Während damit die Radiallagerung über Laufflächen realisiert wird, die vollständig innerhalb der vormontierten Baugruppe gebildet sind, kann die Axiallagerung ggf. erst im Zusammenspiel mit Laufflächen realisiert werden die durch die Aufnahmestrukturen bereitgestellt werden. Die entsprechenden Gleitlagerringe sind jedoch noch in die Baugruppe integriert. Es ist auch möglich, die Axiallagerung in Verbindung mit zusätzlichen Anlaufringen zu realisieren die ebenfalls noch in die vormontierte Baugruppe integriert sein können. Hierdurch wird es möglich, sämtliche für die Lagerung erforderlichen Bewegungsflächen in der Baugruppe bereitzustellen.

Durch das erfindungsgemäße Konzept wird es möglich, ein in sich hinsichtlich der Lagerung komplettiertes Zahnradmodul zu schaffen das als entsprechend fertige Baugruppe von einem Abnehmer zügig verbaut werden kann, ohne dass dieser in Verbindung mit der Aufnahmestruktur Rotationslagerflächen bereitstellen muss. Innerhalb des Zahnradmoduls können durch den Systemlieferanten Lagersysteme realisiert werden die einen Bewegungswirkungsgrad und eine Lebensdauer bieten die deutlich über dem Bewegungswirkungsgrad und der der Lebensdauer von konventionellen Zahnradlagerungen liegen. Durch die Integration der Lagereinrichtung in das Zahnradmodul kann der axiale Überstand des Achszapfens gegenüber bisherigen Bauweisen reduziert und damit auch am Getriebegehäuse eine erhebliche Bauraumersparnis realisiert werden.

Bei der Ausführung der Lagereinrichtung als Wälzlager, insbesondere als Nadellager kann über den Korb desselben eine Axialsicherung des Lagers bewerkstelligt werden. Die Axialsicherung kann auch durch ein Ringelement, beispielsweise einen Federring realisiert sein, welcher in einer Umfangsnut des Achszapfens sitzt und mit seinem Außenbereich in einen Ringspaltraum innerhalb des Wälzlagers eintaucht.

Wie bereits ausgeführt, ist das Wälzlager durch eine Axialsicherungsstruktur in das unter Einschluss des Achszapfens gebildete Zahnradmodul eingebunden. Die Axialsicherungsstruktur wird vorzugsweise durch Strukturen bewerkstelligt die sich im Zusammenspiel mit der Axiallagereinrichtung ergeben. Die Axiallagerung kann als Teillagerung ausgeführt sein, die erst in verbautem Zustand die erforderlichen axial stützenden Laufflächen erhält. Die Axiallagereinrichtung kann jedoch auch als in sich abgeschlossene, sämtliche Laufflächen umfassende Lagereinrichtung ausgeführt sein die über die Komponenten des erfindungsgemäßen Zahnradmoduls bereitgestellt wird.

Gemäß einer besonders bevorzugten Ausführungsform der Erfindung ist der Nabenabschnitt als Zieh- und/oder Fließpressumformungsstruktur gefertigt. Die Zahnkranzeinrichtung kann als Transmissionsstruktur dienen, die sowohl mit Antriebs-, als auch mit Abtriebsorganen in Eingriff steht. Die Verzahnung kann insbesondere als Schneid, Stanz-, oder als Pressumformungsstruktur gefertigt und ggf. spanabhebend überarbeitet sein.

Gemäß einem besonderen Aspekt der vorliegenden Erfindung kann der Grundkörper so gestaltet sein, dass dieser zwei Zahnkranzzonen bildet. Die hierbei erste Zahnkranzzone kann ein Großrad, insbesondere einen Stirnradzahnkranz mit großem Durchmesser bilden. Die zweite Zahnkranzzone kann einen Ritzelzahnkranz bilden der vorzugsweise unmittelbar auf dem Nabenabschnitt sitzt. Das Material des Nabenabschnitts kann hierbei wiederum von innen her wellig in die Verzahnung einbauchen. Der Achszapfen kann durch Einpressen und hierbei erlangtem Presssitz fixiert sein.

Das erfindungsgemäße Antriebszahnradmodul kann so gestaltet werden, dass dieses in sich wenigstens zwei Funktionen, als Zahn- oder Kettenrad zur Momentenübertragung sowie die Lagerung des Rades erfüllt. Das Antriebszahnradmodul besteht aus den Hauptkomponenten, Zahn- oder Kettenrad zur Momentenübertragung, und der Lagerung mittels integrierter Gleit- und/oder Wälzlagerorgane, wobei diese Komponenten verliersicher auf einer Achse zusammengebaut sind. Das Zahn- oder Kettenrad kann auch zur Momentenübertragung auf die Welle oder den Achszapfen aufgepresst sein. Das Antriebszahnradmodul kann dann mindestens eine als eingepresste Wälzlagerung ausgeführte Wellen-Lagerung aufweisen die als solche verliersicher in das Antriebszahnradmodul integriert ist. Das Antriebszahnradmodul kann so aufgebaut sein, dass dieses als Rad mit Momentenübertragung innerhalb des Radkörpers (z.B. 2 Zahneingriffe) fungiert und dabei mit der Welle eine Einheit bildet, wobei das Antriebszahnradmodul auch hier mindestens eine Wellen-Lagerung mittels integrierter, radialer Wälzlagerung und axialer Wälz- oder Gleitlagerung umfasst. Die Grundkomponenten Zahradkorpus, Achskörper und Lagerung sind verliersicher zusammengebaut. Das Antriebszahnradmodul kann auch so gestaltet sein, dass dieses als Rad mit Momentenübertragung innerhalb des Radkörpers (2 Zahneingriffe) fungiert und mit einer Achse eine Einheit bildet und mindestens eine Wellen-Lagerung in Form einer integrierten, insbesondere einpressten Wälzlagerung umfasst wobei letztere verliersicher in das Antriebszahnradmodul integriert ist.

### Kurzbeschreibung der Figuren

Weitere Einzelheiten und Merkmale der Erfindung ergeben sich aus der nachfolgenden Beschreibung in Verbindung mit der Zeichnung. Es zeigt:

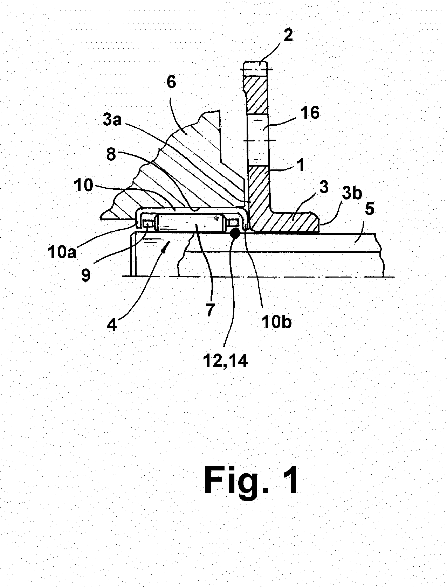

- **Figur 1**: eine erste Axialschnittdarstellung zur Veranschaulichung des Aufbaus einer ersten Ausführungsform einer erfindungsgemäßen Zahnradeinrichtung für einen Getriebestrang, hier mit einem durch ein Ringelement am Achszapfen axial gesicherten Nadellager;

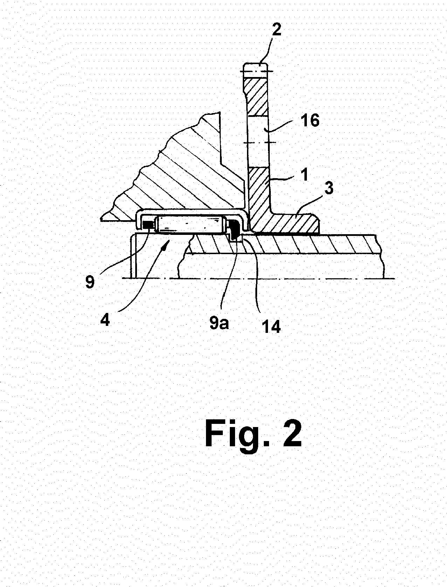

- **Figur 2**: eine zweite Axialschnittdarstellung zur Veranschaulichung des Aufbaus einer zweiten Ausführungsform einer erfindungsgemäßen Zahnradeinrichtung für einen Getriebestrang, bei welcher die axiale Sicherung des Nadellagers über radial einfedernde Rastschultern bewerkstelligt wird die an einem der Nadelführung dienenden Fensterkäfig ausgebildet sind;

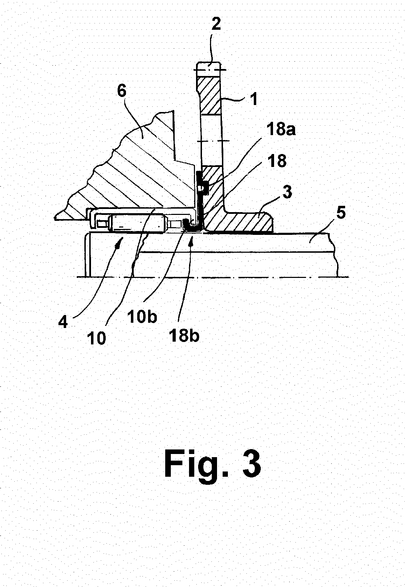

- **Figur 3**: eine dritte Axialschnittdarstellung zur Veranschaulichung des Aufbaus einer dritten Ausführungsform einer erfindungsgemäßen Zahnradeinrichtung für einen Getriebestrang, mit einem in einer Nadelbuchse eingefassten Nadellager, wobei diese Nadelbuchse über einen Anlauf- oder Axiallagerring an dem Zahnradgrundkörper axial gesichert ist;

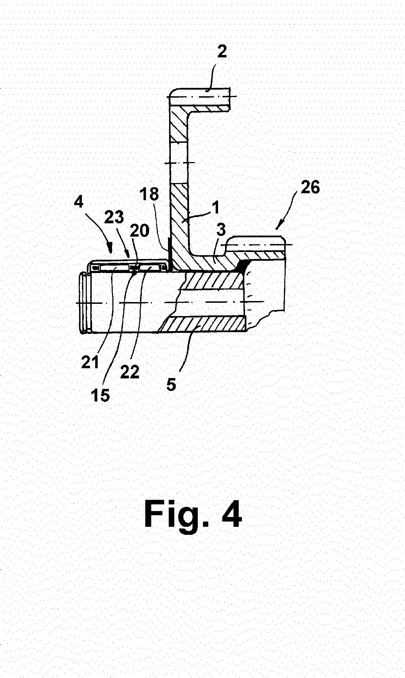

- **Figur 4**: eine vierte Axialschnittdarstellung zur Veranschaulichung des Aufbaus einer vierten Ausführungsform einer erfindungsgemäßen Zahnradeinrichtung mit zwei Zahnkränzen. Ausführliche Beschreibung der Figuren

In Figur 1 ist eine erfindungsgemäße Zahnradeinrichtung dargestellt. Diese umfasst einen Grundkörper 1 der einen Zahnkranz 2, sowie einen Nabenabschnitt 3 bildet. In dem Nabenabschnitt 3 des Grundkörpers 1 ist ein Achszapfen 5 aufgenommen. Auf dem Achszapfen 5 sitzt eine Lagereinrichtung 4. Die Lagereinrichtung 4 ist auf den Achszapfen 5 aufgesetzt und an dem Achszapfen 5 axial gesichert. Der Grundkörper 1, die Lagereinrichtung 4 und der Achszapfen 5 bilden eine für sich vormontierte Baueinheit die von einem Abnehmer in eine hier durch eine Gehäusehälfte 6 gebildete Aufnahmebohrung 8 eingesetzt werden kann, ohne dass der Abnehmer sich in besonderem Maße mit der Montage und dem Detailaufbau der Lagereinrichtung 4 zu befassen hat.

In der Gehäusehälfte 6, ist eine Passbohrungen 8 ausgebildet. Die Passbohrung 8 kann unter geringen Anforderungen an die Oberflächengüte ihrer Passflächen gefertigt, insbesondere als einfache Bohrung gefertigt werden. Wie in dieser Darstellung weiter ersichtlich, ist der Achszapfen 5 als Hohlzapfen ausgeführt.

Der Grundkörper 1 ist gemäß einem besonderen Aspekt der vorliegenden Erfindung hier als Blechumformteil gefertigt. Der Zahnkranz 2 ist als Stanzgeometrie gefertigt und geringfügig überschliffen. Der Nabenabschnitt 3 ist als Zieh- und Fließpressgeometrie erstellt und im Bereich der Stirnseiten 3a, 3b überdreht.

Die Lagereinrichtung 4 ist bei diesem Ausführungsbeispiel als Wälzlager ausgeführt und umfasst einen auf dem Achszapfen 5 abwälzenden Nadelkranz 7 der in einem Fensterkäfig 9 geführt ist. Der Nadelkranz 7 ist in einer Nadelbuchse 10 eingefasst. Die Nadelbuchse 10 bildet im Bereich ihrer Axialenden jeweils eine radial einwärts vordringende Ringsschulter 10a, 10b. Durch diese Ringschultern 10a, 10b wird der axiale Verlagerungsweg des Fensterkäfigs 9 und damit auch des Nadelkranzes 7 begrenzt.

Bei dem hier gezeigten Ausführungsbeispiel wird die Sicherung der Lagereinrichtung 4 auf dem Achszapfens 5 bewerkstelligt, indem in Nachbarschaft zu dem von der Ringschulter 10b umgriffenen Bereich des Achszapfens 5 in diesem eine Umfangsnut 14 ausgebildet ist, in welche ein Ringelement 12 eingesetzt ist. Dieses Ringelement 12 kann aus einem Drahtmaterial, beispielsweise Federstahl gefertigt werden und damit relativ stramm in der zugeordneten Nut 14 sitzen. Vorzugsweise jedoch ist das Ringelement 14 aus einem Werkstoff, z.B. einem Kunststoffmaterial gefertigt, dass lediglich eine für die geforderte Verliersicherungswirkung ausreichende Festigkeit hat und sich ansonsten ggf. während des Betriebs der Getriebeeinrichtung allmählich aufbrauchen kann. Bei der Ausführung aus einem Kunststoffmaterial wird vermieden, dass dieses Bauteil soweit dieses sich unvorhergesehen lösen sollte zu Schäden in der Getriebeeinrichtung führt. Die hierdurch realisierte Sicherungsstruktur fungiert damit primär als Montagehilfe.

Die axiale Sicherung der Lagereinrichtung 4 an dem Achszapfens 5 kann auch durch anderweitige Organe, insbesondere unmittelbar durch die Nadellagerlaufbuchse 10 oder durch seitens der Ringschultern 10a, 10b bereitgestellte Strukturen realisiert werden. So können beispielsweise die Ringschultern 10a, 10b so gestaltet sein, dass diese unter leichter radial Weitung über den Achszapfen 5 geschoben werden und dann in Nuten einschnappen die an entsprechender Stelle in dem Achszapfen 5 ausgebildet sind.

An dem Grundkörper 1 können weitere Geometrien verwirklicht sein durch welche z.B. die Struktursteifigkeit erhöht und/oder die Bauteilsmasse und das Trägheitsmoment reduziert werden. Lediglich beispielhaft sind bei dem hier gezeigten Ausführungsbeispiel Durchbrechungen 16 aus dem Grundkörper 1 ausgestanzt.

In Figur 2 ist ein weiteres Ausführungsbeispiel einer erfindungsgemäßen Zahnradeinrichtung dargestellt. Auch diese Zahnradeinrichtung umfasst einen Grundkörper 1, einen an dem Grundkörper 1 ausgebildeten Zahnkranz 2, einen Nabenabschnitt 3, eine Lagereinrichtung 4 und einen Achszapfen 5 auf welchen die Lagereinrichtung 4 aufgesetzt ist, wobei der Achszapfen 5 und die Lagereinrichtung 4 an dem Grundkörper 1, konkret in dem Nabenabschnitt 3 derart axial gesichert sind, dass der Grundkörper 1, die Lagereinrichtung 4 und der Achszapfen 5 eine für sich vormontierte Baueinheit bilden.

Auch bei diesem Ausführungsbeispiel ist der Achszapfen 5 derart dimensioniert, dass dieser beidseitig axial über die entsprechende Stirnseite des Nabenabschnitts 4 übersteht.

Bei diesem Ausführungsbeispiel wird die axiale Sicherung der Lagereinrichtung 4 an dem Achszapfen 5 durch eine im Zusammenspiel mit dem Fensterkäfig 9 realisierte Sicherungseinrichtung bewerkstelligt. Diese Sicherungseinrichtung umfasst eine integral mit dem Fensterkäfig 9 ausgebildete Rasnase 9a die als solche während des Aufschiebens des Fensterkäftigs 9 auf den Achszapfen 5 nach temporärer radialer Auslenkung bei Erreichen der Funktionsposition in die Umfangsnut 14 einschnappen kann.

Auch bei diesem Ausführungsbeispiel ist der Grundkörper als Blechumformteil, insbesondere als Zieh- und Fließ-/Pressteil gestaltet und mit Durchbrüchen 16 versehen. In dem Zwischenbereich zwischen dem Nabenabschnitt 3 und dem Zahnkranz 2 können hier nicht näher dargestellte Umfangssicken ausgebildet werden, durch welche die Steifigkeit des Grundkörpers 1 erhöht wird.

In Figur 3 ist ein drittes Ausführungsbeispiel einer erfindungsgemäßen Zahnradeinrichtung dargestellt. Wie auch bei den beiden vorangehend beschriebenen Ausführungsbeispielen umfasst Zahnradeinrichtung einen Grundkörper 1, einen an dem Grundkörper 1 ausgebildeten Zahnkranz 2, einen Nabenabschnitt 3, eine Lagereinrichtung 4 und einen Achszapfen 5 auf welchen die Lagereinrichtung 4 aufgesetzt ist, wobei die Lagereinrichtung 4 auf dem Achszapfen 5 derart axial gesichert ist, dass der Grundkörper 1, die Lagereinrichtung 4 und der Achszapfen 5 eine für sich vormontierte Baueinheit bilden.

Abweichend von den vorangehend beschriebenen Ausführungsbeispielen ist hier die axiale Sicherung der Lagereinrichtung 4 durch einen Axiallagering 18 bewerkstelligt der an dem Grundkörper 1 befestigt ist. Der Axiallagerring 18 besteht aus einem duktilen Gleitlagerwerkstoff und ist über Einpresszapfen 18a oder Nieten an dem Grundkörper 1 gesichert. Der Axiallagerring 18 bildet eine Haltestruktur 18b. Diese Haltestruktur ist als Ringwulst ausgeführt welcher die Ringschulter 10b der Nadellagerlaufbuchse 10 von innen her untergreift. Durch die Fixierung des Axiallagerringes 18 an dem Grundkörper ist damit auch die Nadellagerlaufbuchse 10 auf dem Achszapfen 5 drehbar axial gesichert.

In Figur 4 ist eine vierte Variante einer erfindungsgemäßen Zahnradeinrichtung dargestellt. Diese Zahnradeinrichtung umfasst wiederum einen Grundkörper 1, einen an dem Grundkörper 1 ausgebildeten Zahnkranz 2, einen Nabenabschnitt 3, eine Lagereinrichtung 4 und einen Achszapfen 5 auf welchen die Lagereinrichtung 4 aufgesetzt ist, wobei die Lagereinrichtung 4 an dem Achszapfen 5 derart axial gesichert sind, dass der Grundkörper 1, die Lagereinrichtung 4 und der Achszapfen 5 eine für sich vormontierte Baueinheit bilden.

Die Lagereinrichtung 4 ist als Wälzlager, konkret als zweireihiges Nadellager ausgeführt. Diese Nadellager umfasst eine erste und eine zweite Nadellaufreihe 21, 22. Die Nadeln der beiden Laufreihen 21, 22 sind in einem gemeinsamen Korb oder Fensterkäfig 20 derart geführt, dass zwischen den Laufreihen 21, 22 ein Ringraum 23 verbleibt. In diesen Ringraum 23 taucht radial von innen her ein in dem Achszapfen 5 axial gesicherter Sicherungsring 12 ein. Durch diesen Sicherungsring 12 ist die Lagerung 4 an dem Achszapfen 5 axial gesichert und die so zusammengesetzten Komponenten bilden eine in sich geschlossene Baugruppe die von einem Abnehmer effizient in ein entsprechendes Getriebesystem eingebunden werden kann.

Bei der hier gezeigten Zahnradeinrichtung umfasst der Grundkörper 1 neben den außenseitigen Zahnkranz 2 auch einen Ritzelabschnitt 26 der unmittelbar auf dem Nabenabschnitt 3 sitzt. Dieser Ritzelabschnitt 26 ist durch eine Fließ- /Pressumformung gefertigt. Der Ritzelabschnitt 26 wird axial teilweise von der Zahnkranzeinrichtung 2 überkragt. Durch diese Maßnahme wird es möglich, ein mit dem Ritzelabschnitt kämmendes Zahnrad zumindest teilweise in den von der Zahnkranzeinrichtung 2 umgriffenen Innenbereich hineinzuführen und damit den axialen Baurumbedarf eines unter Einschluss der hier gezeigten Zahnradeinrichtung realisierten Getriebesystems zu reduzieren.

Durch das erfindungsgemäße Konzept wird es für einen mit der Fertigung von Getriebekomponenten betrauten Zulieferer möglich eine sowohl ein Zahnrad, eine Lagereinrichtung sowie auch ein die Lagereinrichtung tragendes Zapfenelement umfassende Baueinheit bereitzustellen die beim Abnehmer ohne filigrane Montageaktionen, ggf. vollautomatisiert in eine entsprechende Gehäusestruktur eingesetzt werden kann, wobei sich auch hinsichtlich der Fertigung der Gehäusestruktur Vereinfachungen ergeben.

Durch das erfindungsgemäße Konzept wird es zudem möglich, hinsichtlich ihrer Integrationsschnittstellen gleichartige Baueinheiten zu schaffen die jedoch unterschiedliche, z.B. anforderungsspezifisch qualitativ entsprechend aufgebaute Lagerungen beinhalten.

Die erfindungsgemäße Zahnradeinrichtung kann im Bereich ihrer Lagerung mit einem Sonderschmierstoff befrachtet sein, durch welchen unmittelbar bei Inbetriebnahme eine vorteilhafte Schmierung und ein günstiges Einlaufverhalten sichergestellt wird.

## Patentansprüche

1. Zahnradeinrichtung mit:
einem Grundkörper (1),
einem an dem Grundkörper (1) ausgebildeten Zahnkranz (2),
- einem Nabenabschnitt (3),
- einem Achszapfen (5), und
- einer Lagereinrichtung die auf den Achszapfen (5) aufgesetzt ist,
- wobei der Achszapfen (5) und die Lagereinrichtung (4) an dem Grundkörper derart axial gesichert sind, dass der Grundkörper (1), die Lagereinrichtung (4) und der Achszapfen (5) eine für sich vormontierte Baueinheit bilden.

2. Zahnradeinrichtung nach Anspruch 1, **dadurch gekennzeichnet, dass** der Achszapfen (5) derart dimensioniert ist, dass dieser beidseitig axial über die entsprechende Stirnseite des Nabenabschnitts (3) übersteht.

3. Zahnradeinrichtung nach Anspruch 1 oder 2, **dadurch gekennzeichnet, dass** der Achszapfen (5) als Hohlzapfen ausgeführt ist.

4. Zahnradeinrichtung nach Anspruch 1 oder 2, **dadurch gekennzeichnet, dass** der Achszapfen (5) als Vollmaterialzapfen ausgeführt ist.

5. Zahnradeinrichtung nach wenigstens einem der Ansprüche 1 bis 4, **dadurch gekennzeichnet, dass** der Grundkörper als Blechumformteil gefertigt ist.

6. Zahnradeinrichtung nach wenigstens einem der Ansprüche 1 bis 5, **dadurch gekennzeichnet, dass** die Lagereinrichtung (4) als Gleitlager ausgeführt ist.

7. Zahnradeinrichtung nach wenigstens einem der Ansprüche 1 bis 5, **dadurch gekennzeichnet, dass** die Lagereinrichtung (4) als Wälzlager ausgeführt ist.

8. Zahnradeinrichtung nach Anspruch 7, **dadurch gekennzeichnet, dass** die Lagereinrichtung (4) als zweireihiges Nadellager ausgeführt ist und der Achszapfen 5 in dem Nadellager axial gesichert ist.

9. Zahnradeinrichtung nach Anspruch 8, **dadurch gekennzeichnet, dass** die Lagereinrichtung (4) ein Axiallagerorgan umfasst, wobei dieses Axiallagerorgan als Gleitlagerring (18) ausgeführt ist.

10. Zahnradeinrichtung nach wenigstens einem der Ansprüche 1 bis 9, **dadurch gekennzeichnet, dass** im Zusammenspiel mit dem Nabenabschnitt (3) ein Zahnradritzel (26) gefertigt ist.
